# EUROPEAN PATENT APPLICATION

(11) **EP 1 936 032 A1**
(43) Date of publication of application: **25.06.2008**
(21) Application number: 06126413.1
(22) Date of filing: 18.12.2006
(51) Int. Cl.: D21H 11/18, D21H 27/38, D21H 27/10

(54) **Method of producing a paper product**

(71) Applicant: Akzo Nobel N.V., 6800 SB Arnhem (NL)
(72) Inventor: Wildlock, Ylva, 442 33, KUNGÄLV (SE); Heijnesson-Hultén, Anette, 443 39, LERUM (SE)
(74) Representative: Vikholm, Tommy

(57) **Abstract**

The invention relates to a method of producing a laminate paper product comprising at least two layers, said method comprising
(i) providing an aqueous suspension comprising cellulosic fibers
(ii) adding to the suspension microfibrillar polysaccharide in an amount to yield from about 0.05 to about 50 wt% based on the weight of the cellulosic fibers
(iii) dewatering the obtained suspension and forming a first layer having a density from about 150 to about 500 kg/m³ of said laminate paper product.

The invention also relates to a laminate paper product obtainable by the method and the use thereof for storage of liquid or solid foods.

## Description

The present invention relates to a method of producing low density paper products, especially low density board. The invention also relates to a paper product obtainable by said method and the use thereof.

### Background of the invention

Today, the development within the papermaking industry is focused on reducing the grammage of paper or board products while maintaining strength properties. This trend is of high importance of both economical and environmental reasons. In order to produce paper or board products with lower grammage it is of interest to use low density fibers. However, one drawback with those pulp fibers is their poor ability to form strong fiber-fiber bonds which in turn results in insufficient strength properties.

WO 00/14333 relates to a method in which latex is used as a binder in the bulk layer to improve strength properties. However, WO 00/14333 suffers from high amounts of chemicals (latex) needed and problems related to application of the binder. As an example, if latex is added to the wet end, retention problems of the latex on the fibers may cause deposit problems as well as disturbance of the wet end chemistry balance. Application problems may also arrive if latex were added to already formed paper or board layers using existing equipment. Latex may also result in repulpability problems. One object of the invention is to provide a new process for producing low density paper or board products while maintaining strength and stiffness properties. A further object of the present invention is to provide paper or board products which can be repulped without problems in conventional repulpers. A further object is to provide a process for producing a low density multilayer paper board product with improved binding capability of fibers in at least one inner layer and which has improved creasability and reduced edge wick adsorption, particularly for use in liquid packaging board.

### The invention

The present invention relates to a method of producing a laminate paper product comprising at least two layers, said method comprising
i) providing an aqueous suspension comprising cellulosic fibers
ii) adding to the suspension microfibrillar polysaccharide in an amount to yield from about 0.05 to about 50 wt% based on the weight of the cellulosic fibers
iii) dewatering the obtained suspension and forming a first layer having a density from about 150 to about 500 kg/m³ of said laminate paper product.

The forming of a layer, e.g. said first layer, involves pressing the formed layer, e.g. by means of press nips which may increase the density of the layer. Pressing may thus be used to control the density of the produced layer(s). Therefore, the selection of appropriate pulp may also be of importance to provide a formed layer of desired density.

The term "polysaccharide" include, without limitation, cellulose, hemicellulose, chitin, chitosan, guar gum, pectin, alginate, agar, xanthan, starch, amylose, amylopectin, alternan, gellan, mutan, dextran, pullulan, fructan, locust bean gum, carrageenan, glycogen, glycosaminoglycans, murein, bacterial capsular polysaccharides, and derivatives thereof. The polysaccharide may be used as it is, or spinning may be used to generate or improve fibrous structure.

However, microfibrillar cellulose would be the most commonly selected microfibrillar polysaccharide and will therefore be described more in detail herein. Sources of cellulose for the preparation of microfibrillar cellulose include the following: (a) wood fibers, e.g. derived from hardwood and softwood, such as from chemical pulps, mechanical pulps, thermal mechanical pulps, chemical-thermal mechanical pulps, recycled fibers, (b) seed fibers, such as from cotton; (c) seed hull fiber, such as from soybean hulls, pea hulls, corn hulls; (d) bast fibers, such as from flax, hemp, jute, ramie, kenaf, (e) leaf fibers, such as from manila hemp, sisal hemp; (f) stalk or straw fibers, such as from bagasse, corn, wheat; (g) grass fibers, such as from bamboo; (h) cellulose fibers from algae, such as velonia; (i) bacteria or fungi; and (j) parenchymal cells, such as from vegetables and fruits, and in particular sugar beets, and citrus fruits such as lemons, limes, oranges, grapefruits. Microcrystalline forms of these cellulose materials may also be used. Cellulose sources include (1) purified, optionally bleached, wood pulps produced from sulfite, kraft (sulfate), or prehydrolyzed kraft pulping processes, (2) purified cotton linters, and (3) fruits and vegetables, in particular sugar beets and citrus fruits. The source of the cellulose is not limiting, and any source may be used, including synthetic cellulose or cellulose analogs. According to one embodiment, the microfibrillar polysaccharide is derived from hardwood and/or softwood.

For purposes of the present invention polysaccharide microfibrils refer to small diameter, high length-to-diameter ratio substructures which are comparable in dimensions to those of cellulose microfibrils occurring in nature. While the present specification refers to microfibrils and microfibrillation, these terms are here also meant to include (nano) fibrils with nanometer dimensions (cellulosic or other).

According to one embodiment, the microfibrillar polysaccharide, e.g. microfibrillar cellulose, is modified e.g. by means of grafting, cross-linking, chemical oxidisation, for example by use of hydrogen peroxide, Fenton's reaction, and/or Tempo; physical modification such as adsorption, e.g. chemical adsorption; and enzymatic modification. Combined technologies may also be used to modify the microfibrillar cellulose.

Cellulose can be found in nature in several hierarchical levels of organization and orientation. Cellulose fibers comprise a layered secondary wall structure within which macrofibrils are arranged.

Macrofibrils comprise multiple microfibrils which further comprise cellulose molecules arranged in crystalline and amorphous regions. Cellulose microfibrils range in diameter from about 5 to about 100 nanometers for different species of plant, and are most typically in the range of from about 25 to about 35 nanometers in diameter. The microfibrils are present in bundles which run in parallel within a matrix of amorphous hemicelluloses (specifically xyloglucans), pectinic polysaccharides, lignins, and hydroxyproline rich glycoproteins (includes extensin). Microfibrils are spaced approximately 3-4 nm apart with the space occupied by the matrix compounds listed above. The specific arrangement and location of the matrix materials and how they interact with the cellulose microfibrils is not yet fully known.

According to one embodiment, the polysaccharide is refined or delaminated to such an extent that the final specific surface area of the formed microfibrillar polysaccharide is from about 1 to about 100, such as from about 1.5 to about 15, or from about 3 to about 10 m²/g. The viscosity of the obtained aqueous suspension of microfibrillar polysaccharide can be from about 200 to about 4000, or from about 500 to about 3000, or from about 800 to about 2500 mPas. The stability, which is a measure of the degree of sedimentation of the suspension can be from about 60 to 100, such as from about 80 to about 100 %, where 100 % indicates no sedimentation for a period of at least 6 months.

According to one embodiment, the microfibrillar polysaccharide has an arithmetic fiber length from about 0.05 to about 0.5, for example from about 0.1 to about 0.4, or from about 0.15 to about 0.3 mm. According to one embodiment, the microfibrillar polysaccharide is added to the suspension in an amount to yield from about 0.5 to about 30, for example from about 1 to about 15, such as from about 1 to about 10 wt% based on the weight of the cellulosic fibers.

Non-delaminated wood fibers, e.g. cellulose fibers, are distinct from microfibrillar fibers because the fiber length of wood fibers ranges usually from about 0.7 to about 3 mm. The specific surface area of cellulosic fibers usually is from about 0.5 to about 1.5 m²/g. Delamination can be carried out in various devices suitable for delaminating the fibers of the polysaccharides. The prerequisite for the processing of the fibers is that the device is capable or is controlled in such way that fibrils are released from the fiberwalls. This may be accomplished by rubbing the fibers against each other, the walls or other parts of the device in which the delamination takes place. According to one embodiment, the delamination is accomplished by means of pumping, mixing, heat, steam explosion, pressurization-depressurization cycle, impact grinding, ultrasound, microwave explosion, milling, and combinations thereof. In any of the mechanical operations disclosed herein, it is important that sufficient energy is applied to provide microfibrillar polysaccharide.

According to one embodiment, the aqueous suspension contains cellulosic fibers from chemical pulp, such as sulphate and sulphite pulp, organosolv pulp; recycled fibers; and/or mechanical pulp including e.g. refiner mechanical pulp (RMP), pressurized refiner mechanical pulp (PRMP), pretreatment refiner chemical alkaline peroxide mechanical pulp (P-RC APMP), thermomechanical pulp (TMP), thermomechanical chemical pulp (TMCP), high-temperature TMP (HT-TMP) RTS-TMP, alkaline peroxide pulp (APP), alkaline peroxide mechanical pulp (APMP), alkaline peroxide thermomechanical pulp (APTMP), Thermopulp, groundwood pulp (GW), stone groundwood pulp (SGW), pressure groundwood pulp (PGW), super pressure groundwood pulp (PGW-S), thermo groundwood pulp (TGW), thermo stone groundwood pulp (TSGW), chemimechanical pulp (CMP), chemirefinermechanical pulp (CRMP), chemithermomechanical pulp (CTMP), high-temperature CTMP (HT-CTMP), sulphite-modified thermomechanical pulp (SMTMP), reject CTMP (CTMP_{R}), groundwood CTMP (G-CTMP), semichemical pulp (SC), neutral sulphite semi chemical pulp (NSSC), high-yield sulphite pulp (HYS), biomechanical pulp (BRMP), pulps produced according to the OPCO process, explosion pulping process, Bi-Vis process, dilution water sulfonation process (DWS), sulfonated long fibres process (SLF), chemically treated long fibres process (CTLF), long fibre CMP process (LFCMP), and modifications and combinations thereof. The pulp may be a bleached or non-bleached pulp.

Cellulosic fibers can be derived from hardwood, softwood species, and/or nonwood. Examples of hardwood and softwood include birch, beech, aspen such as European aspen, alder, eucalyptus, maple, acacia, mixed tropical hardwood, pine such as loblolly pine, fir, hemlock, larch, spruce such as Black spruce or Norway spruce, and mixtures thereof. Non-wood plant raw material can be provided from e.g. straws of grain crops, wheat straw reed canary grass, reeds, flax, hemp, kenaf, jute, ramie, seed, sisal, abaca, coir, bamboo, bagasse or combinations thereof.

According to one embodiment, the cellulosic fibers are derived from hardwood and/or softwood species.

According to one embodiment, the aqueous suspension to which microfibrillar polysaccharide is added contains cellulosic fibers in an amount from about 0.01 to about 50, for example from about 0.1 to about 25 or from about 0.1 to about 10 wt%.

According to one embodiment, the paper product being produced is board, paper, or a combination of layers of board and paper.

According to one embodiment, at least one second layer is arranged or joined to said first layer, for example directly or indirectly over substantially their whole surfaces facing one another. According to one embodiment, the laminate may comprise for example at least three or four layers. This may be performed by any conventional technology.

According to one embodiment, two layers having a density from about 400 to about 1000 kg/m³ are joined to said first layer on either side thereof to form outer layers of said paper product.

According to one embodiment, a paper product, for example a board such as a liquid packaging board, comprising at least three layers is formed whereby the product is obtained by arranging, e.g. joining directly or indirectly an inner layer formed from an aqueous suspension comprising microfibrillar polysaccharide according to the invention and outer layers produced from an aqueous suspension with or without microfibrillar polysaccharide.

According to one embodiment, there may be further layers, e.g. barrier layers, on top of the layers as defined or between said layers. Any of the layers can also be coated to improve e.g. edge wick resistance, printability or the like. According to one embodiment, coated layers may in turn be coated with a plastic layer or intended to be plastic-coated if the paper product of the invention is an intermediate product. Such plastic coating may further improve liquid penetration and heat-sealing properties of the product.

According to one embodiment, at least one outer layer is produced from a chemical pulp obtained in accordance with any of the methods as disclosed herein or other conventional methods for obtaining chemical pulp. The pulps may be bleached or unbleached.

According to one embodiment, the outer layer(s) has a density from about 400 to about 1000, for example from about 500 to about 1000 or for example from about 510 to about 1000 such as from about 510 to about 770, or from about 530 to about 700, such as from about 590 to about 670 kg/m³.

According to one embodiment, said first layer is produced from a mechanical and/or chemical pulp obtained from wood or nonwood pulp in accordance with any of the methods as disclosed herein or other conventional methods for obtaining pulp. According to one embodiment, the first layer is produced from at least about 40, e.g. at least about 50, for example at least about 60 or at least about 75 wt% mechanical pulp based on the total pulp weight. The pulps may be bleached or unbleached.

According to one embodiment, the first layer, normally functioning as an inner layer, has a density from about 200 to about 450, for example from about 220 to about 450 such as from about 250 to about 400 kg/m³.

According to one embodiment, the laminate is produced in such a way that a grammage ranging from about 80 to about 1500, for example from about 150 to about 1000, or from about 200 to about 700 g/m² is obtained.

According to one embodiment, the density of the overall laminate ranges from about 150 to about 800 such as from about 150 to 700 or from about 200 to about 640 or from about 250 to about 600 such as from about 300 to about 500.

According to one embodiment, the suspension also contains mineral fillers of conventional types, such as, for example, kaolin, clay, titanium dioxide, gypsum, talc and both natural and synthetic calcium carbonates, such as, for example, chalk, ground marble, ground calcium carbonate, and precipitated calcium carbonate. The aqueous suspension can also contain papermaking additives of conventional types, such as drainage and retention chemicals, wet and dry strength agents, sizing agents, such as those based on rosin, ketene dimers, ketene multimers, alkenyl succinic anhydrides, etc.

According to one embodiment, wet and dry strength agents may be added in an amount from about 0.5 to about 30 kg/t pulp. According to one embodiment, sizing agent(s) may be added in amount from about 0.5 to about 10 kg/t pulp.

According to one embodiment, the invention is applied on paper machines producing wood-containing paper or board and/or paper or board based on recycled fibers, different types of book and newsprint papers, and/or on machines producing nonwood-containing printing and writing papers.

The invention also relates to a paper product obtainable by the method as disclosed herein. Particularly, the invention relates to liquid packaging board obtainable by the method, in particular for use as storage containers for liquid and/or solid foods. Further examples of applications include the production of paper products including multilayered paper and/or board, wrapping and packaging material for goods such as industrial goods or as an intermediate product for manufacture of such end products or other paper products.

The invention being thus described, it will be obvious that the same may be varied in many ways. The following examples will further illustrate how the described invention may be performed without limiting the scope of it.

All parts and percentages refer to part and percent by weight, if not otherwise stated.

### Brief description of the figures

Figure 1 shows the tensile index versus the amount of microfibrillar polysaccharide added.
Figure 2 shows the stiffness index versus the amount of microfibrillar polysaccharide added.
Figure 3 shows the tensile index versus the density of the inner layer.
Figure 4 shows the Z-strength versus the density of the inner layer.
Figure 5 shows the effect of lamination on the board density.
Figure 6 shows the effect of board lamination on the bending stiffness index.
Figure 7 shows the relative creasing strength of the laminated board in the machine direction (MD) and the cross direction (CD).
Figure 8 shows the edge wick properties of the laminated boards.

### Example 1

A) A paper product was produced wherein the top and back layers had the same composition as a commercial board with a grammage of 60 g/m² from a mixture of hardwood and softwood kraft pulp fibers (60/40) using a dynamic sheet former. The amounts of chemicals added to the suspension prior to sheet formation were the following: 0.13% Eka WS XO (PAAE, polyamidamineepichlorohydrin condensate), 0.1% Eka DR 28HF (AKD, alkyl ketene dimer), 0.6% Raisamyl 142 (starch), 0.03% Eka PL1510 (cationic polyacrylamide) and 0.05% NP320 (silica sol) based on the amount of pulp.
B) Top and back layers of a board with a grammage of 56 g/m² and 53 g/m² respectively were prepared as in a), but with addition of microfibrillar polysaccharide in various amounts having the following characteristics: arithmetic fiber length: 0.25 mm, specific surface area 5 g/m², viscosity: 1098 mpas, stability: 100%, WRV: 5.39 (g/g).

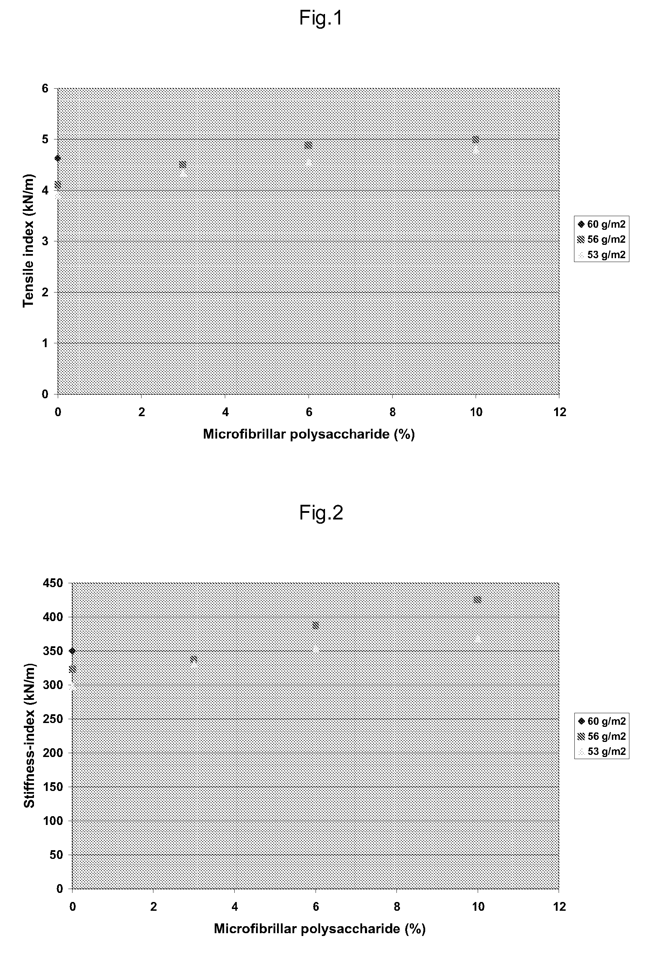

Top and back layers prepared according to A) and B) were analyzed for their grammage, tensile, and stiffness properties. From figure 1, it can be seen that the tensile index for boards produced from stocks to which microfibrillar polysaccharide was added had about the same or higher tensile index than boards produced from a stock without addition of microfibrillar polysaccharide even though the grammage were 53 and 56 g/m², i.e. lower than the reference (60 g/m²). Similar observation can be made in view of tensile stiffness as illustrated in figure 2.

### Example 2

A) A paper product was produced wherein the inner layer had same composition as a commercial board with a grammage of 130 g/m² from a mixture of 60% CTMP-pulp, 20% pulped broke, and 20% softwood kraft using a dynamic sheet former. The amounts of chemicals added to the suspension prior to sheet formation were as follows: 0.13% PAAE, 0.35% AKD, 0.6% starch, 0.03% PL1510 and 0.05% NP320 based on the weight of pulp including pulped broke.
B) The inner layer of a board having a grammage of 130 g/m² was prepared as in A from a mixture of 75% CTMP-pulp, 20% pulped broke and 5% softwood kraft but with addition of microfibrillar polysaccharide in amounts from 2 to 8%, while the other chemicals were added as in a).
C) The inner layer of a board having a grammage of 130 g/m² was prepared as in a) from a mixture of 75% HT-CTMP-pulp, 20% pulped broke and 5% softwood kraft but with addition of microfibrillar polysaccharide in an amount from 2 to 8% while the other chemicals were added as in A.

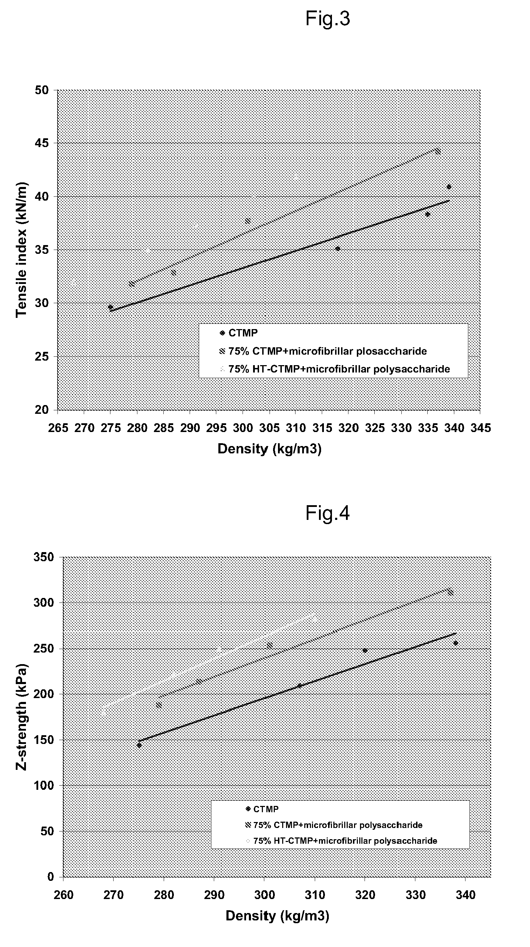

The inner layers of the boards prepared according to A-C were analyzed for their tensile index and Z-strength properties. It is evident from figures 3-4 that the density of the inner layer of the board can be reduced while maintaining the tensile index and the Z-strength by adding microfibrillar polysaccharide in combination with an increased amount of CTMP, especially HT-CTMP to form the inner layer.

### Example 3

A) A paper product was produced with the same composition as a commercial board with a total grammage of 250 g/m² using a dynamic sheet former. Top and bottom layers, each 60 g/m², were prepared from a mixture of 60% hard and 40% softwood kraft pulp fibers. The inner-layer, 130 g/m², was prepared from a mixture of 60% CTMP, 20% pulped broke and 20% softwood kraft pulp fibers. The chemical addition levels in the different layers were the same as in Example 1 and 2.
B) A three-layer board having a total grammage of 215 g/m², top and bottom layers having a grammage of 53 g/m² and a inner-layer of 109 g/m² were prepared as in A) but with addition of microfibrillar polysaccharide. The amount of microfibrillar polysaccharide added to top and back layers was 2 %, while the other chemicals were added as in A) in example 1. The inner layer was produced from a pulp comprising 75% HT-CTMP, 20 % pulped broke, 5% softwood kraft pulp fibers as well as 3% microfibrillar polysaccharide, 0.13% PAAE, 0.35% AKD, 0.9% starch, 0.03% PL1510 and 0.05% NP320, all amounts in % based on the amount of pulp including pulped broke.
C) A three-layer board having a total grammage of 215 g/m² was prepared as in b) but having a inner layer prepared from a fiber mixture of 80% HT-CTMP and 20% pulped broke. The chemical addition to the stock was based on the weight of pulp: 5% microfibrillar polysaccharide, 0.13% PAAE, 0.35% AKD, 0.9% starch, 0.03% PL1510 and 0.05% NP320.

The boards produced according to A-C were analyzed for their density, dry strength, Z-strength and bending stiffness (see Table 2).

**Table 2**

| Three layer | Grammage | Density | Tensile strength | Z-strength | Bending stiffness |
|---|---|---|---|---|---|
| board | (g/m²) | (kg/m³) | index (kN/m) | (kPa) | (kgNm/kg) |
| Sample A | 250 | 463 | 14.8 | 261 | 447 |
| Sample B | 215 | 421 | 13.9 | 206 | 433 |
| Sample C | 215 | 392 | 13.3 | 167 | 485 |

The results presented in table 2 show that the bending stiffness is essentially maintained or improved while the tensile index is essentially maintained in samples B and C compared to reference A despite the fact that samples B and C have a much lower grammage and density.

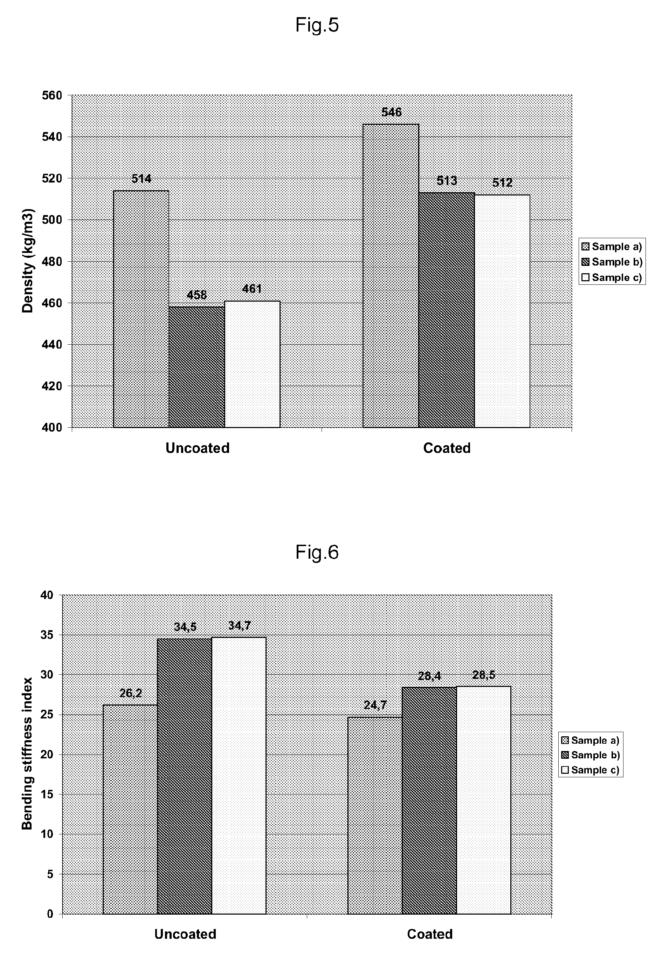

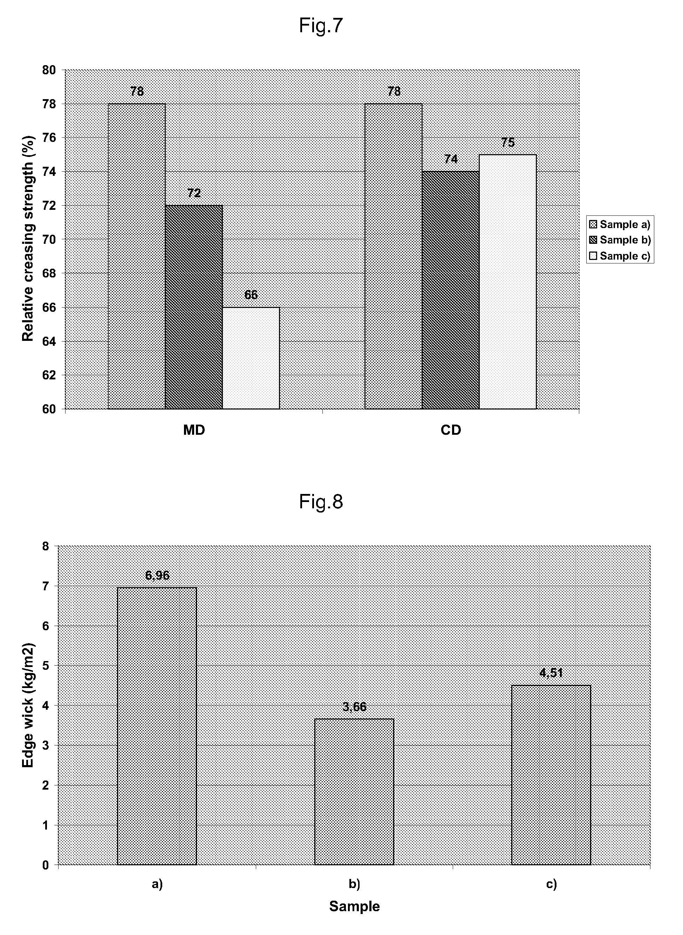

Boards produced according to A-C were coated (laminated) and analyzed for their density, bending stiffness and relative creasing strength and edge wick. By comparing coated and non-coated samples (see Figures 6 -7) it can be seen that lamination of the boards with polyethylene increases the density and thus reduces the bending stiffness for all boards. However, ii is still evident that an increased bending stiffness index can be obtained for boards B and C produced with addition of microfibrillar polysaccharide to the stock compared to the reference A. Furthermore, a favourable reduction in relative creasing strength (figure 8) and edge wick properties (figure 9) of the laminated boards according to the invention can also be seen. When the edge wick is reduced (B and C) compared to reference A, the liquid resistance at the edges is strengthened.

## Claims

1. Method of producing a laminate paper product comprising at least two layers, said method comprising
(i) providing an aqueous suspension comprising cellulosic fibers
(ii) adding to the suspension microfibrillar polysaccharide in an amount to yield from about 0.05 to about 50 wt% based on the weight of the cellulosic fibers
(iii) dewatering the obtained suspension and forming a first layer having a density from about 150 to about 500 kg/m³ of said laminate paper product.

2. Method according to claim 1, wherein the paper product is board.

3. Method according to claim 1 or 2, wherein microfibrillar polysaccharide is added to the suspension in an amount to yield from about 1 to about 10 wt% based on the weight of cellulosic fibers.

4. Method according to any one of claims 1 to 3, wherein the cellulosic fibers are derived from a mechanical pulp.

5. Method according to any one of claims 1 to 4, wherein the first layer has a density from about 220 to about 450 kg/m³.

6. Method according to any one of claims 1 to 5, wherein the microfibrillar polysaccharide is microfibrillar cellulose.

7. Method according to any one of claims 1 to 6, wherein the microfibrillar cellulose is modified.

8. Method according to claim 7, wherein the microfibrillar cellulose is modified by means of grafting, cross-linking, chemical oxidisation, physical and/or enzymatic modification.

9. Method according to any one of claims 1 to 8, wherein the microfibrillar polysaccharide has a specific surface area from about 1 to about 100 g/m².

10. Method according to any one of claims 1 to 9, wherein the microfibrillar polysaccharide has an arithmetic fiber length from about 0.05 to about 0.5 mm.

11. Method according to any one of claims 1 to 10 comprising joining a second layer to said first layer, wherein the second layer has a density from about 400 to about 1000 kg/m³.

12. Method according to any one of claims 1 to 11 comprising joining a second layer to said first layer, wherein the second layer has a density from about 510 to about 1000 kg/m³.

13. Method according to any one of claims 1 to 11 comprising joining two layers having a density from about 400 to about 1000 kg/m³ to said first layer on either side thereof to form outer layers of said paper product.

14. Method according to claim 13, wherein said first layer is produced from mechanical pulp and the outer layers are produced from chemical pulp.

15. Method according to claim 13 or 14, wherein the laminate paper product has a grammage from about 80 to about 1500 g/m².

16. Method according to any one of claims 1 to 15, wherein the laminate paper product is a liquid packaging board.

17. Laminate paper product obtainable by any one of claims 1 to 16.

18. Use of a laminate paper product according to claim 17 for storage of liquid and/or solid foods.
